# EUROPEAN PATENT APPLICATION

(11) **EP 4 763 465 A1**
(43) Date of publication of application: **24.06.2026**
(21) Application number: 24220880.9
(22) Date of filing: 18.12.2024
(51) Int. Cl.: B29C 43/00, B29C 43/20, B32B 1/00, B32B 5/02, B29C 70/08, B29C 43/14, B29C 43/48, B29C 43/52, B32B 5/18, B32B 27/12, B32B 37/10, B32B 37/12, B32B 38/18, B32B 37/00, B32B 5/24

(54) **METHOD OF PRODUCING THREE-DIMENSIONAL AUTOMOTIVE COMPONENTS USING THERMOPLASTIC COMPRESSION MOULDING**

(71) Applicant: Cisma Solutions ApS, 8600 Silkeborg (DK)
(72) Inventor: Sass-Petersen, Martin, 8600 Silkeborg (DK)
(74) Representative: Høiberg P/S

(57) **Abstract**

A method of production of three-dimensional components for transportation vehicles is disclosed. The method comprises the steps of: creating a base material, cutting the base material into a desired shape, heating the cut base material, and forming the heated base material into the desired three-dimensional shape by compression moulding, wherein the base material is a sandwich structure comprising a core made of a synthetic foam material arranged between two outer layers, which are made from the same synthetic material, wherein the base material is made from at least 90% by weight, such as at least 95% by weight, preferably at least 98%, most preferably 100% by weight of the same polymer material.

## Description

### Technical field

The present invention relates to a method of producing three-dimensional automotive components using thermoplastic compression moulding.

### Background

Plastic components are extensively used in the automotive industry due to their light weight, durability and adaptability to complex shapes. These attributes make them advantageous for reducing vehicle weight, improving fuel efficiency, and meeting design flexibility demands.

To enhance the strength and stiffness of the plastic components, reinforcement by mixing glass fibres in the plastic component or combination of different types of plastic, either mixed or in a multi-layer structure, is used. Adhesives and other bonding agents are also frequently used to combine materials or improve structural integrity. Common methods for production of plastic automotive components include injection moulding, blow moulding and compression moulding. The method used depends on the desired properties of the final product. These methods often rely on multi-material designs, incorporating layers of plastics with differing properties to achieve a balance of strength, flexibility, and durability.

Despite their advantages, these methods present significant challenges, particularly concerning sustainability and end-of-life recycling. The inclusion of glass fibres in plastics and the use of multiple polymer types make the disassembly and recycling of these components a costly and labour-intensive process. Furthermore, the variety of materials often limits the purity of recycled products, reducing their usability and economic value. Another disadvantage of existing methods is the reliance on adhesives or incompatible material combinations, which further complicate recycling processes. As environmental regulations become stricter, particularly in regions like the European Union, manufacturers face increasing pressure to address the challenges of managing waste from end-of-life vehicles. Current methods, which rely heavily on multi-material systems, are therefore insufficient to meet these regulatory and environmental demands.

It is therefore an objective of the present disclosure to provide a method for producing automotive components that addresses the challenges of recycling, regulatory compliance, and material efficiency while maintaining the high-quality performance required for such applications.

### Summary

It is a purpose of the present disclosure to enable easier recycling of automotive plastic components and, thus, to contribute to the implementation of the regulation regarding the end-of-life of that has been proposed by the EU. This is obtained by producing plastic components made from a single polymer material, which can be done fast and with an outstanding quality using the method of the present disclosure.

Thus, the current disclosure relates to a method of production of three-dimensional components for transportation vehicles, which method comprises the steps of: creating a base material, cutting the base material into a desired shape, heating the cut base material, and forming the heated base material into the desired three-dimensional shape by compression moulding, wherein the base material is a sandwich structure comprising a core made of a synthetic foam material arranged between two outer layers, which are made from the same synthetic material, wherein the base material is made from at least 90% by weight, such as at least 95% by weight, preferably at least 98%, most preferably 100% by weight of the same polymer material.

The disclosed method provides a fast and efficient method for production of three-dimensional components for transportation vehicles. The structure of the base material is selected as it can provide both strength and stiffness. The base material being made from the same synthetic material enables easier recycling at the end-of-life of the component, while the different melting point of the core and outer layers provides the desired structural characteristics.

The polymer material used for the production of the base material may originate from recycled plastic, such as post-consumer plastic, preferably comprising at least 65% recycled content.

Utilizing recycled plastic not only reduces reliance on virgin materials but also supports environmental sustainability by repurposing waste materials that would otherwise contribute to landfill or pollution. Post-consumer plastics, such as those recovered from discarded packaging, bottles, or automotive parts, are particularly advantageous as they provide a reliable source of high-quality polymer feedstock when properly processed.

By incorporating recycled materials at a significant percentage, such as 65% or more, the production process aligns with modern sustainability goals and regulatory requirements, such as those targeting reductions in carbon emissions and resource consumption. This approach also contributes to circular economy initiatives by keeping valuable materials in use and reducing the overall environmental footprint of the manufacturing process.

Furthermore, advancements in recycling technology enable the processing of post-consumer plastics to achieve properties comparable to virgin materials. This ensures that the recycled polymer maintains the necessary mechanical, thermal, and aesthetic characteristics required for automotive applications. The inclusion of such recycled content does not compromise the performance of the base material but instead enhances its environmental value, making it an ideal choice for sustainable manufacturing practices in the automotive and other industries.

In the step of creating the base material, an adhesive film or foil may be placed between the core and each of the outer layers, respectively, to create bonding between the layers, wherein the adhesive film or foil is made from the same polymer material as the rest of the base material. The use of adhesive film or foil has been found to be advantageous as it enhances the bonding between the core and the outer layers.

The foam material of the core may have a density between 0.01 g/cm³ and 0.7 g/cm³, such as between 0.05 g/cm³ and 0.5 g/cm³, preferably 0.1 g/cm³. Densities in this range has been found to be advantageous for the disclosed method.

The foam material of the core may have a thickness between 1 mm and 50 mm, such as between 5 mm and 30 mm, preferably 15 mm. The optimal thickness of the core depends on the type of the desired characteristics of the final product. The foam material of the core is used for its strength, while being lightweight.

The outer layer may comprise woven self-reinforcing continuous fibres commingled with continuous matrix filaments, made from the same polymer material, wherein the melting point of the matrix filaments is lower than the melting point of the reinforcement fibres and the core. Both continuous fibres and matrix filaments are used for the construction of the outer layer. This results in an outer layer with high stiffness.

The outer layer may have a density between 0.5 g/cm³ and 5 g/cm³, such as between 0.9 g/cm³ and 3 g/cm³, preferably 1.36 g/cm³. Densities in this range has been found to be advantageous for the disclosed method.

The outer layer may have a thickness between 0.5 mm and 5 mm, such as between 0.8 mm and 3 mm, preferably 1.1 mm. The optimal thickness of the outer layer depends on the desired characteristics of the final product.

In the step of creating the base material, the core and the outer layers may be laminated together through a prepreg or press operation. The use of other bonding agents are not needed. Lamination through this process additionally enables easier recycling at the end-of-life of the final product.

The polymer material can be Polyethylene terephthalate (PET), Polylactic acid (PLA) or Polyamide (PA). The choice of polymer material depends on the suitability of the material for a specific component type and its use on the interior or exterior of the automotive vehicle.

The heating may take place at a temperature between 130 °C and 210 °C, such as between 140 °C and 200 °C, preferably at 170 °C. The heating at this temperature range has been found to be suitable for the disclosed method.

The heating may last from 15 to 90 seconds, such as 30 to 75 seconds, preferably for 50 seconds. The duration of heating at this time range has been found to be suitable for the disclosed method. A short heating duration is desired for faster and more efficient production of the three-dimensional components.

The heated material, after the end of the heating period, may be moved to a forming station, within less than 10 seconds, such as within less than 8 seconds, preferably within 1 to 5 seconds. Fast transportation of the heated material is desired for faster and more efficient production of the three-dimensional components. Fast transportation can additionally ensure that the heated material retains the temperature to which it has been heated until it reaches the forming station.

The forming station may comprise a press mould and a curing station. The heated material can be placed in the press mould, producing a three-dimensional component.

The press mould may be preheated to a temperature of between 40°C and 150°C, such as between 50°C and 110°C, preferably 80°C. Preheating the press mould to temperatures within this temperature range has been found to be suitable for the disclosed method and the polymer materials used.

The temperature of the press mould may be kept while pressing the heated piece into the desired three-dimensional shape. This can ensure that a stable temperature is maintained during the pressing process, throughout the base material. Avoidance of defects, breakage or inhomogeneities in the compression can be achieved this way.

The three-dimensional shaped material is kept under pressure in the mould for a time period between 3 and 60 seconds, such as between 5 and 30 seconds, preferably between 8 and 15 seconds, most preferably for 11 seconds. This has been found to be suitable for production of three-dimensional components according to the disclosed method.

### Description of Figures

- Fig. 1: Side view of the base material according to an embodiment of the disclosure, comprising of a core and two outer layers.
- Fig. 2a: Top view of the base material shown in Fig. 1 before being cut into shape.
- Fig. 2b: Top view of the base material of Fig. 2a after being cut into shape.
- Fig. 3a: Side view of the cut base material positioned on the compression mould, before being pressed.
- Fig. 3b: Side view of the three-dimensional shaped material positioned on the compression mould, while pressure is applied.

### Detailed description

Unless stated otherwise, in the context of the present disclosure, the expression "composite material" is to be understood also to include a material, which comprises two or more forms of the same material. These forms may differ from each other with respect to density, melting point, rigidity and other material characteristics. An example of such a composite material is the outer layer 3 of the base material 1 of the present disclosure as described below, in which a plastic material includes a fibre re-enforcement, the fibres of which are made from the same plastic material as the rest of the outer layer 3.

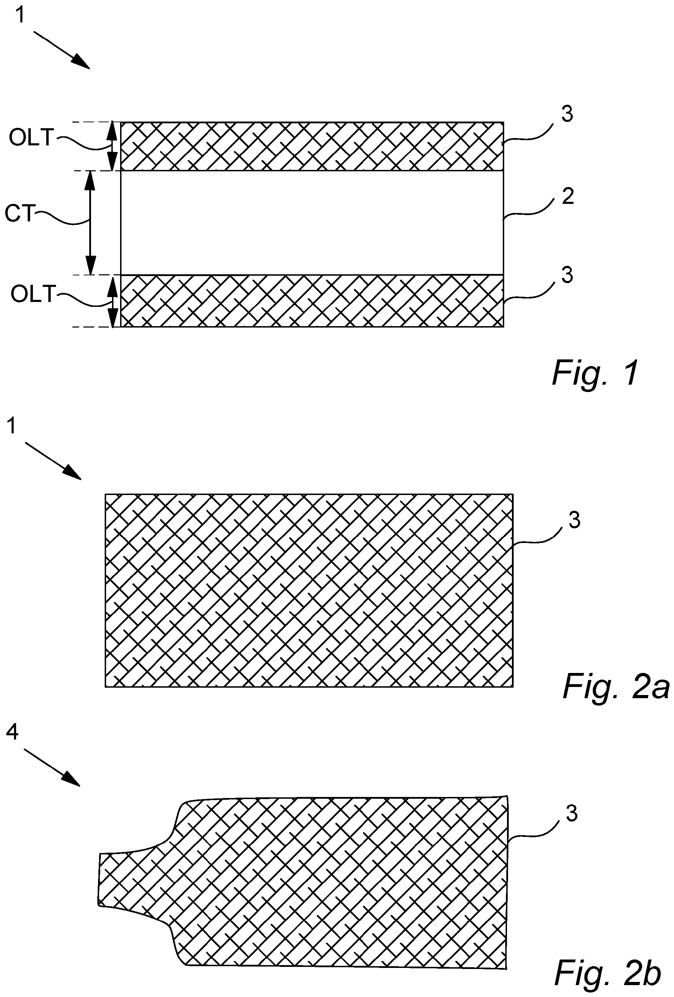

Fig. 1 shows a side view of a base material 1. The base material 1 is used for a method of production of three-dimensional components for transportation vehicles, which method comprises the steps of: creating a base material, cutting the base material into a desired shape, heating the cut base material 4, and forming the heated base material 4 into the desired three-dimensional shape by compression moulding. The base material 1 is a sandwich structure comprising a core 2 made of a synthetic foam material arranged between two outer layers 3, which are made from the same synthetic material. The base material 1 is made from at least 90% by weight, such as at least 95% by weight, preferably at least 98%, most preferably 100% by weight of the same polymer material.

The disclosed method is addressing key challenges in the production of three-dimensional automotive components. By using a base material 1 in the form of a sandwich structure comprising a synthetic foam core 2 and outer layers 3 made from the same polymer material, the method simplifies the material composition of automotive components. This single-material approach enables more straightforward recycling processes, aligning with increasingly stringent environmental regulations.

The method according to the current disclosure leads to a three-dimensional automotive component with enhanced mechanical performance due to the unique properties of the sandwich structure. The foam core 2 provides a lightweight yet strong foundation, while the outer layers 3 deliver the required stiffness for structural applications. This combination ensures the production of components that are both robust and lightweight, contributing to improved fuel efficiency and performance in transportation vehicles.

The efficiency of the production process of three-dimensional automotive components is increased by this method. By eliminating the need for chemical or other bonding agents, the lamination of the core 2 and outer layers 3 can be accomplished in a streamlined prepreg or press operation. This not only reduces production time and costs but also enhances the environmental benefits by avoiding the use of potentially non-recyclable materials. The overall process ensures high-quality components with precise dimensional accuracy while maintaining compatibility with existing production technologies.

The polymer material used for the production of the base material 1 may originate from recycled plastic, such as post-consumer plastic, preferably comprising at least 65% recycled content. Utilizing recycled plastic not only reduces reliance on virgin materials but also supports environmental sustainability by repurposing waste materials that would otherwise contribute to landfill or pollution. Post-consumer plastics, such as those recovered from discarded packaging, bottles, or automotive parts, are particularly advantageous as they provide a reliable source of high-quality polymer feedstock when properly processed.

In one embodiment, in the step of creating the base material 1 an adhesive film or foil may be placed between the core 2 and each of the outer layers 3, respectively, to create bonding between the layers, wherein the adhesive film or foil is made from the same polymer material as the rest of the base material 1. The adhesive film or foil can provide a reliable and uniform connection that enhances the structural integrity and performance of the base material 1. The adhesive film or foil can be applied as a thin layer, ensuring that the weight and thickness of the base material 1 are not significantly increased. The adhesive film or foil can be introduced prior to the lamination step, where it melts and flows during the heating and pressing stages. The adhesive film or foil softens and fuses seamlessly with the surrounding material, creating a homogeneous interface. This homogeneous structure can eliminate the risk of nonuniform bonding in the base material 1. The use of a compatible polymer adhesive film or foil also ensures that the mechanical properties of the base material 1 remain consistent throughout. Since the adhesive film or foil is chemically and thermally compatible with the core 2 and outer layers 3, the risk of thermal degradation during lamination or subsequent heating steps is minimized.

From a manufacturing perspective, the incorporation of an adhesive film or foil enhances the efficiency of the lamination process. It reduces the need for high pressure and temperature or complex mechanical bonding techniques, as the adhesive film or foil facilitates efficient bonding at lower pressures and controlled temperatures. This enables faster processing times while maintaining the quality and consistency of the laminated base material 1. Furthermore, the use of a polymer-compatible adhesive film or foil improves the environmental sustainability of the process by avoiding the use of additional chemical adhesives, which may contain harmful substances or complicate recycling efforts.

In one embodiment, the foam material of the core 2 has a density between 0.01 g/cm³ and 0.7 g/cm³, such as between 0.05 g/cm³ and 0.5 g/cm³, preferably 0.1 g/cm³. This range of density has been carefully selected to balance the mechanical properties and weight of the core material. A lower density within this range ensures that the core 2 remains lightweight, which is advantageous for applications requiring reduced overall component weight to improve fuel efficiency in transportation vehicles. Simultaneously, maintaining sufficient density ensures that the foam provides adequate strength and resistance to compression, which is necessary for the structural stability of the final component. By tailoring the density of the foam, it is possible to optimize the energy absorption characteristics, making the material particularly suitable for applications such as impact-resistant panels or lightweight load-bearing structures.

In one embodiment, the outer layer 3 has a density between 0.5 g/cm³ and 5 g/cm³, such as between 0.9 g/cm³ and 3 g/cm³, preferably 1.36 g/cm³. This density range reflects the need for high stiffness and durability in the outer layers 3 while maintaining manageable material weight. The higher density of the outer layer 3 contributes to its structural rigidity, ensuring the final component can withstand significant mechanical loads and stresses without deformation.

For applications where enhanced mechanical strength is needed, the outer layers 3 may comprise more than one layers of the outer layer material. Stacking two or more layers of the outer layer material during the lamination of the base material 1 can result in enhanced mechanical strength, for applications where it is necessary.

In one embodiment, the foam material of the core 2 has a thickness CT between 1 mm and 50 mm, such as between 5 mm and 30 mm, preferably 15 mm. This thickness range of the core 2 allows for flexibility in designing components with varying mechanical requirements while ensuring optimal performance. A thinner core 2, within the lower range, is suitable for applications where minimal weight and compactness are prioritized, such as interior trim components. Conversely, a thicker core 2 provides enhanced structural strength and energy absorption, making it advantageous for components subjected to higher mechanical stresses, such as load-bearing panels or impact-resistant parts.

In one embodiment, the outer layer 3 has a thickness OLT between 0.5 mm and 5 mm, such as between 0.8 mm and 3 mm, preferably 1.1 mm. This range of thickness ensures that the outer layer 3 provides sufficient stiffness and durability to the overall structure while maintaining a lightweight profile. A thinner outer layer 3 within the range, such as 0.5 mm, is suitable for applications where flexibility and reduced material usage are advantageous, such as interior panels or decorative trim. In contrast, a thicker outer layer 3, such as 1.1 mm, offers enhanced resistance to mechanical stress, making it suitable for components exposed to higher loads or environmental factors, such as exterior panels.

In one embodiment, the outer layer 3 comprises woven self-reinforcing continuous fibres commingled with continuous matrix filaments, made from the same polymer material wherein the melting point of the matrix filaments is lower than the melting point of the reinforcement fibres and the core. Both self-reinforcing continuous fibres and continuous matrix filaments are used for the construction of the outer layer 3. The commingling process of the self-reinforcing continuous fibres and the continuous matrix filaments in the outer layer 3 involves a methodical intermingling of these two distinct types of fibres to form a composite material with enhanced mechanical properties. This process ensures that the fibres are uniformly distributed throughout the material, enabling optimal performance during moulding and in the final component.

The self-reinforcing continuous fibres provide the structural backbone of the composite.

They are made from the same polymer as the material of the matrix filaments but are processed to have superior mechanical properties. This is achieved through techniques such as molecular alignment, where the polymer chains in the fibres are aligned in the direction of the fibre. This can significantly enhance their tensile strength and stiffness. Another technique can be flow-induced crystallization, where during the fibre formation process, the polymer is subjected to specific flow conditions that promote the formation of highly ordered crystalline regions, further improving the mechanical properties. The production of self-reinforcing fibres involves several advanced manufacturing techniques such as melt spinning or gel spinning. Self-reinforcing fibres have high strength and stiffness, are lightweight and often exhibit excellent resistance to chemicals and environmental degradation. These characteristics, especially the high strength-to-weight ratio make them advantageous for use in automotive components.

The matrix filaments act as the binding medium that encapsulates the reinforcing fibres, ensuring that the material conforms to the shape of the mould while providing cohesive bonding between the layers. Both the self-reinforcing continuous fibres and the continuous matrix filaments comprising the outer layers 3 are made from the same polymer material, being the same as the core 2 material. The commingling process can involve mechanical or pneumatic methods or advanced weaving or knitting techniques to intertwine the fibres thoroughly to create a uniform and consistent distribution. This intermingling ensures that the matrix fibres surround and adhere to the reinforcing fibres uniformly during thermal processing.

During heating, the matrix filaments, having lower melting point than the reinforcement fibres, soften and flow. This creates a homogenous blend that encapsulates the reinforcing fibres. This results in a composite structure where the reinforcing fibres provide exceptional mechanical strength, and the matrix filaments ensure integrity and compatibility with the rest of the material. The commingling process is critical for achieving the high stiffness and durability of the outer layer 3, which is essential for the structural demands of automotive components.

In one embodiment, the polymer material is Polyethylene terephthalate (PET), Polylactic acid (PLA) or Polyamide (PA). These polymer materials can be used as the base material in the disclosed method. PET is typically used for automotive components, usually in the form of a composite material, where glass fibre reinforcement is required. PA is commonly used in automotive components, due to the fact that it can withstand high temperatures. For enhanced performance, composite structures based on a combination with fibres such as carbon or aramid may be used. PLA is a biodegradable thermoplastic which is limited in terms of heat resistance, impact strength, and durability, restricting its use to non-structural applications.

The above mentioned limitations of these polymer materials can be overcome by implementing the method according to the current disclosure. The use of the sandwich structure and production of automotive components according to the current disclosure can eliminate the need for fibre reinforcement based on other type of material, enabling simpler and more efficient production processes as well as enabling easier recycling processes.

In the step of creating the base material, the core 2 and the outer layers 3 may be laminated together through a prepreg or press operation. In one embodiment, the core 2 consists of a PET foam material and the outer layer 3 is produced by weaving continuous fibres commingled with continuous matrix filaments and is made from 100% thermoplastic PET without glue or additives. In one embodiment, the core material 2 has a density of 0.1 g/cm³, while the outer layers 3 have a density of 1.36 g/cm³. In this three layer construction, the outer layers 3 provide the stiffness, whereas the core 2 made of foam will bring strength while lightweight.

Before being laminated together, the core 2 and outer layer materials 3 are typically dried for minimum one day at a temperature between 20 °C and 60 °C. The base material 1, constructed in the outer layer-core-outer layer form may be placed on a PTFE or teflon belt press and laminated together at a speed of between 1 m/min and 3 m/min. The base material 1 may go through several rolls that are heated up at a temperature of, for instance, between 130 °C and 210 °C, in order to be bound together by applying a force of, for instance, between 5 N/cm² and 40 N/cm².

After that, the base material 1 should typically start a cooling down process for consolidation at between 15 °C and 30 °C. Waste edges may be cut off for a width of 50 cm and 200 cm. The base material 1 can then be cut off in panels depending on end-use needs.

Figs. 2a and 2b show a top view of the base material 1 and the cut base material 4, respectively. The base material 1 is cut into a predefined shape depending on the type of component it will be formed into. Cutting takes place so that when the material has been compression moulded, minor or no additional trimming of the edges is needed. The base material 1 can be cut into a desired shape for example by using digital equipment such as laser cutting, ultrasonic, oscillating knife, cold or warm water cutting or air cutting. This allows for a precise and fast cutting of the base material 1. As shown in Fig. 2a the base material 1 may be in a rectangular shape. An example of the cut base material 4 is shown in Fig. 2b for the case of a component for a car seat.

In one embodiment, the cut base material 4 is heated using an infrared oven. A heating method that enables fast heating of the cut base material 4 is desired, with uniform heating across the cut base material 4. Efficient heating might also be advantageous as less energy would be required if heating takes place only in the cut material and not in the surroundings. Infrared ovens fulfil the above mentioned criteria and therefore could be a good option for heating of the cut base material 4. Infrared ovens deliver heat in exact amounts to a specific point and do not heat up the surrounding space like a convection or conduction oven. They heat primarily through radiation and at faster rates than convection ovens. Utilizing infrared ovens allows a significant increase in the level and control of the process heating.

Heating can take place at a temperature between 130 °C and 210 °C, such as between 140 °C and 200 °C, preferably at 170 °C. This temperature range has been carefully chosen to ensure the effective softening of the cut base material 4 without causing degradation or compromising its structural integrity. Heating at lower temperatures within this range may be suitable for materials with lower melting points or for applications requiring slower thermal processing to achieve uniform heating. Conversely, higher temperatures within the range may be used for materials with higher thermal thresholds, allowing for faster processing and reduced cycle times.

The heating can last from 15 to 90 seconds, such as 30 to 75 seconds, preferably for 50 seconds. The duration of heating is determined by the material properties, the thickness of the cut base material 4, and the specific requirements of the forming process. Shorter heating times within the range may be suitable for thinner materials or when rapid production is necessary to meet high throughput demands. Longer heating times may be required for thicker or more complex materials to ensure uniform heating throughout the material's cross-section. This controlled heating approach is advantageous for achieving optimal performance in the final three-dimensional shaped component.

In one embodiment, heating of the cut base material 4 can comprise a second step of heating. This step could serve to further prepare the cut base material 4 for the forming process by enhancing its pliability and ensuring optimal bonding between its layers during compression. The second step of heating can take place at a temperature between 180 °C and 250 °C, such as between 200 °C and 230°C, preferably at 215 °C. This higher temperature range is selected to target the outer layers 3 of the base material 1, allowing them to achieve a state of increased malleability while maintaining the structural integrity of the core 2 material. The second step of heating can last from 5 to 15 seconds, such as 8 to 12 seconds, preferably for 10 seconds. This short duration ensures rapid heating of the material surface to the desired temperature without excessive thermal exposure of the core 2 that could lead to degradation or warping.

In one embodiment, the heated material can be moved, after the end of the heating period, to a forming station, for instance by means of a robotic manipulator or a sliding conveyor or both. This step is designed to ensure the efficient and precise transfer of the heated material while maintaining its optimal temperature for forming. The use of a robotic manipulator, for example, can offer high precision and flexibility, allowing the material to be placed accurately into the forming station, which is particularly useful for complex or custom-shaped components. It can be programmed to handle various material sizes and shapes, reducing the risk of misalignment and ensuring consistency in the production process. The use of a sliding conveyor, as another example, can provide a continuous and automated means of transferring the heated material, supporting high-throughput manufacturing environments. Conveyors can be equipped with temperature-controlled surfaces to minimize heat loss during transit, maintaining the material in its softened state for optimal moulding. In cases where both precision and speed are needed, a combination of robotic manipulators and sliding conveyors can be employed, leveraging the strengths of each system. This way, transportation of the heated material to the forming station takes a short time and the cooling of the heated piece is minimized.

In one embodiment, the heated material may be moved, after the end of the heating period, to a forming station, within less than 10 seconds, such as within less than 8 seconds, preferably within 1 to 5 seconds. This rapid transfer is advantageous for ensuring that the heated material retains its optimal temperature and pliability for forming. The short transit time minimizes cooling or uneven temperature distribution that could compromise the material's properties and the quality of the final product. By maintaining the material within its desired thermal range, the method ensures that the forming process proceeds with consistent material behaviour, reducing the likelihood of defects such as warping, cracking, or incomplete moulding.

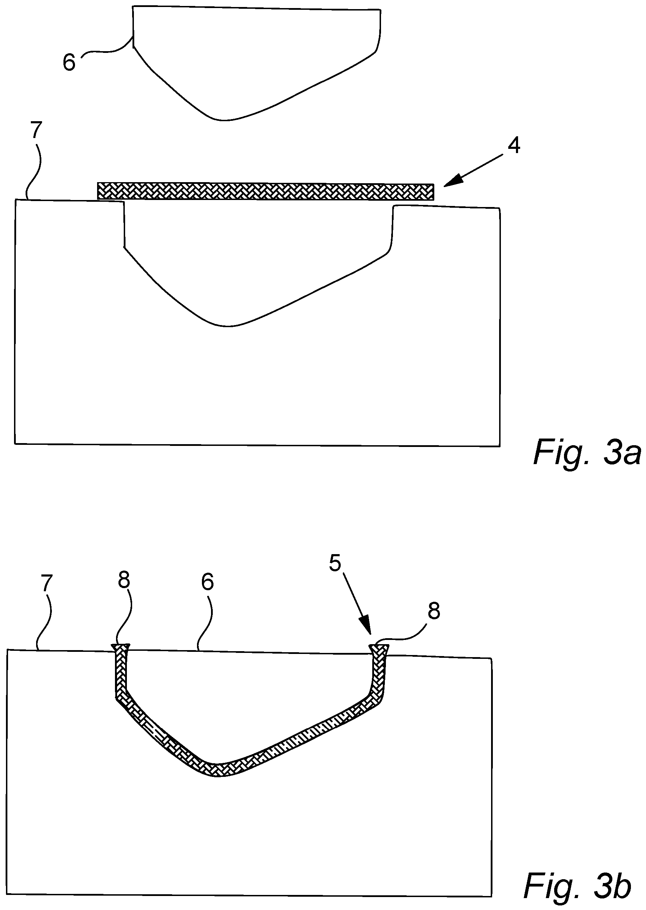

In one embodiment, the forming station can comprise a press mould and a curing station. The press mould is designed to apply precise pressure and temperature control during the moulding process. It typically consists of a movable part 6 and a stationary part 7, both of which are engineered to accommodate the specific geometry of the final product. The press mould ensures that the material conforms accurately to the mould's contours, delivering high precision and repeatability in component production. The curing station complements the press mould by stabilizing the formed component after the moulding process. Once the material has been shaped, it is advantageous to cool and cure the component to solidify its structure and ensure it retains its desired form. The curing station provides controlled cooling, often using temperature-regulated plates or airflow systems, to gradually lower the component's temperature to below the material's glass transition or crystallization point. This controlled cooling prevents thermal stresses or warping that could arise from rapid or uneven temperature changes. In addition to cooling, the curing station may also include features for post-mould treatments, such as surface hardening or coating application, depending on the specific requirements of the component. Fig. 3a and 3b show the process of compression moulding for the cut base material 4.

In one embodiment, the press mould can be preheated to a temperature of between 40 °C and 150 °C, such as between 50 °C and 110 °C, preferably 80 °C. Preheating the press mould ensures effective transfer of heat to the material during the forming process, which is advantageous for achieving uniform shaping and bonding. A preheated mould minimizes thermal gradients between the heated material and the mould surface, reducing the risk of rapid cooling that could lead to uneven material flow, surface defects, or incomplete formation of complex geometries. The specified temperature range is carefully chosen to suit a variety of materials and process conditions. Lower temperatures within the range, such as 40 °C, may be used for materials with lower melting points or in cases where excessive heat could degrade the material's properties. Higher temperatures, up to 150 °C, are suitable for high-performance materials that require additional thermal energy to achieve optimal pliability and bonding during the moulding process.

In one embodiment, the temperature of the press mould can be kept while pressing the heated piece into the desired three-dimensional shape. Maintaining a stable mould temperature is advantageous for ensuring uniform heat distribution throughout the material during the compression process. This consistency prevents localized cooling or overheating, which can lead to defects such as incomplete formation, warping, or weak bonding between layers. A stable mould temperature also helps in achieving repeatability and precision across multiple production cycles. By eliminating temperature fluctuations, the process ensures that all components meet the same high-quality standards, with precise dimensions and consistent mechanical properties. This is particularly important for components with intricate geometries or tight tolerances, where even minor variations can compromise functionality or assembly compatibility. Fig. 3a shows a side view of the press mould, where the cut base material 4 is placed, before pressure is applied. A movable part of the press mould 6 moves from the first position, shown in Fig. 3a to the second position, as shown in Fig. 3b, pressing the cut base material 4 towards a stationary part of the press mould 7.

In one embodiment, the three-dimensional shaped material 5 may be kept under pressure in the mould for a time period between 3 and 60 seconds, such as between 5 and 30 seconds, preferably between 8 and 15 seconds, most preferably for 11 seconds. This duration of pressure application ensures that the material conforms fully to the mould, achieving the precise shape and surface quality required for the final component. The range of 3 to 60 seconds is designed to accommodate various material types, thicknesses, and complexities of the moulded shape. Shorter durations, such as 3 to 5 seconds, may be sufficient for thin or simple components where the material can quickly adapt to the mould's contours. Conversely, longer durations, up to 60 seconds, may be necessary for thicker materials or intricate designs that require additional time to ensure uniform shaping and bonding across all layers.

In one embodiment, the curing station of the forming station may be used for cooling down the three-dimensional shaped material 5 before removal from the mould. The curing station is used for stabilizing the formed material, ensuring that it solidifies uniformly and retains the precise shape imparted by the mould. Cooling the material in a controlled manner prevents thermal stresses and warping, which could arise from rapid or uneven temperature changes during solidification. This way, the dimensional accuracy and mechanical integrity of the final component are maintained.

In one embodiment, cooling down of the three-dimensional shaped material 5 can last between 10 and 180 seconds, such as between 12 and 100 seconds, preferably between 15 and 30 seconds. It is important that the three-dimensional shaped material 5 is cooled to a temperature below the glass temperature for the material, in order for the shaped material to harden properly. The range of 10 to 180 seconds is designed to accommodate a variety of materials and component specifications. Shorter cooling durations, such as 10 to 12 seconds, may be sufficient for thin or less complex components, where the heat can dissipate quickly without risking deformation or residual stresses. Conversely, longer durations up to 180 seconds may be advantageous for thicker components or materials with lower thermal conductivity, ensuring that the core and outer layers cool uniformly to prevent warping or internal stresses.

In one embodiment, the process results in the thickness of the three-dimensional shaped material 5 being reduced between 10% and 50%, such as between 20% and 40%, preferably between 25% and 35% compared to the base material 1. This controlled reduction in thickness is achieved during the compression moulding process, where the heated material is subjected to pressure in the mould. The reduction allows for the densification of the material, enhancing its structural integrity and mechanical performance. As the material compresses, any trapped air or voids within the structure are eliminated, resulting in a more cohesive and durable component. The specified range of thickness reduction is carefully chosen to balance the need for strength and stiffness with the benefits of reduced material usage. The reduction of thickness will depend on the type of component produced. The thickness of the three-dimensional shaped material 5 may vary across different areas of the component to achieve the desired mechanical properties.

In one embodiment of the current disclosure, in order to ensure that the edges 8 of the three-dimensional shaped material 5 are perfect, the three-dimensional shaped material 5 may be formed with a little extra material along the edges, which may subsequently be removed to obtain the desired edges. The edges 8 of the three-dimensional shaped material 5 may be milled to produce the desired shape. Shrinkage is a natural occurrence when thermoplastic materials are heated and subsequently cooled, as the material undergoes thermal expansion and contraction. This shrinkage can cause minor variations in the final dimensions of the shaped material, particularly at the edges or intricate areas where precise tolerances are required. To compensate for these variations and ensure that the final component meets the desired specifications, milling can be employed as a post-processing step.

The parts may be made by cutting the base material 1 to the precise size needed for shaping the final three-dimensional shaped material 5. This technique, known as near-net shape cutting, involves preparing the base material in a form that closely approximates the dimensions and contours of the final component. This way, less material will be required and no postprocessing would be needed after forming. This approach not only reduces material costs but also simplifies subsequent processing steps.

In one embodiment, the forming station may further comprise a surface treatment station that is configured to be used for coating the three-dimensional shaped material 5, for instance by using a decorative film. This step can take place in the forming station, reducing the need for further processing of the three-dimensional shaped material 5 after its production. This station enables the addition of aesthetic or functional surface treatments during the same production workflow, streamlining the overall manufacturing process. The surface treatment station can apply decorative films, protective coatings, or other surface finishes to enhance the component's visual appeal, durability, or resistance to environmental factors such as UV light, moisture, or abrasion.

### References

- 1: base material
- 2: core
- 3: outer layer
- 4: cut base material
- 5: three-dimensional shaped material
- 6: movable part of the press mould
- 7: stationary part of the press mould
- 8: edges of the three-dimensional shaped material

- CT: core thickness
- OLT: outer layer thickness

### Items

1. A method of production of three-dimensional components for transportation vehicles, which method comprises the steps of: creating a base material, cutting the base material into a desired shape, heating the cut base material, and forming the heated base material into the desired three-dimensional shape by compression moulding,
   wherein the base material is a sandwich structure comprising a core made of a synthetic foam material arranged between two outer layers, which are made from the same synthetic material,
   wherein the base material is made from at least 90% by weight, such as at least 95% by weight, preferably at least 98%, most preferably 100% by weight of the same polymer material.
2. The method according to item 1, wherein in the step of creating the base material an adhesive film or foil is placed between the core and each of the outer layers, respectively, to create bonding between the layers, wherein the adhesive film or foil is made from the same polymer material as the rest of the base material.
3. The method according to items 1 or 2, wherein the foam material of the core has a density between 0.01 g/cm³ and 0.7 g/cm³, such as between 0.05 g/cm³ and 0.5 g/cm³, preferably 0.1 g/cm³.
4. The method according to any of the preceding items, wherein the foam material of the core has a thickness between 1 mm and 50 mm, such as between 5 mm and 30 mm, preferably 15 mm.
5. The method according to any of the preceding items, wherein the outer layer comprises woven self-reinforcing continuous fibres commingled with continuous matrix filaments, made from the same polymer material, wherein the melting point of the matrix filaments is lower than the melting point of the reinforcement fibres and the core.
6. The method according to any of the preceding items, wherein the outer layer has a density between 0.5 g/cm³ and 5 g/cm³, such as between 0.9 g/cm³ and 3 g/cm³, preferably 1.36 g/cm³.
7. The method according to any of the preceding items, wherein the outer layer has a thickness between 0.5 mm and 5 mm, such as between 0.8 mm and 3 mm, preferably 1.1 mm.
8. The method according to any of the preceding items, wherein in the step of creating the base material the core and the outer layers are laminated together through a prepreg or press operation.
9. The method according to any of the preceding items, wherein the polymer material is Polyethylene terephthalate (PET), Polylactic acid (PLA) or Polyamide (PA).
10. The method according to any of the preceding items, wherein the base material is cut into a desired shape for example by using digital equipment such as laser cutting, ultrasonic, oscillating knife, cold or warm water cutting or air cutting.
11. The method according to any of the preceding items, wherein the cut base material is heated using an infrared oven.
12. The method according to any of the preceding items, wherein heating takes place at a temperature between 130 °C and 210 °C, such as between 140 °C and 200 °C, preferably at 170 °C.
13. The method according to any of the preceding items, wherein heating lasts from 15 to 90 seconds, such as 30 to 75 seconds, preferably for 50 seconds.
14. The method according to any of the preceding items, wherein the heating of the cut base material comprises a second step of heating.
15. The method according to item 14, wherein the second step of heating takes place at a temperature between 180 °C and 250 °C, such as between 200 °C and 230 °C, preferably at 215 °C.
16. The method according to items 14 or 15, wherein the second step of heating lasts from 5 to 15 seconds, such as 8 to 12 seconds, preferably for 10 seconds.
17. The method according to any of the preceding items, wherein the heated material is moved, after the end of the heating period, to a forming station, for instance by means of a robotic manipulator or a sliding conveyor or both.
18. The method according to any of the preceding items, wherein the heated material, after the end of the heating period, is moved to a forming station, within less than 10 seconds, such as within less than 8 seconds, preferably within 1 to 5 seconds.
19. The method according to any of the preceding items, wherein the forming station comprises a press mould and a curing station.
20. The method according to item 19, wherein the press mould is preheated to a temperature of between 40 °C and 150 °C, such as between 50 °C and 110° C, preferably 80 °C.
21. The method according to items 19 or 20, wherein the temperature of the press mould is kept while pressing the heated piece into the desired three-dimensional shape.
22. The method according to any of items 19 to 21, wherein the forming station further comprises a surface treatment station that is configured to be used for coating the three-dimensional shaped material, for instance by using a decorative film.
23. The method according to any of items 19 to 22, wherein the three-dimensional shaped material is kept under pressure in the mould for a time period between 3 and 60 seconds, such as between 5 and 30 seconds, preferably between 8 and 15 seconds, most preferably for 11 seconds.
24. The method according to any of items 19 to 23, wherein the curing station of the forming station is used for cooling down the three-dimensional shaped material before removal from the mould.
25. The method according to item 24, wherein cooling down of the three-dimensional shaped material lasts between 10 and 180 seconds, such as between 12 and 100 seconds, preferably between 15 and 30 seconds.
26. The method according to any of the preceding items, wherein the thickness of the three-dimensional shaped material is reduced between 10% and 50%, such as between 20% and 40%, preferably between 25% and 35% compared to the base material.
27. The method according to any of the preceding items, wherein the edges of the three-dimensional shaped material are milled to produce the desired shape.
28. The method according to any of the preceding items, wherein the polymer material used for the production of the base material may originate from recycled plastic, such as post-consumer plastic, preferably comprising at least 65% recycled content.

## Claims

1. A method of production of three-dimensional components for transportation vehicles, which method comprises the steps of: creating a base material, cutting the base material into a desired shape, heating the cut base material, and forming the heated base material into the desired three-dimensional shape by compression moulding,
wherein the base material is a sandwich structure comprising a core made of a synthetic foam material arranged between two outer layers, which are made from the same synthetic material,
wherein the base material is made from at least 90% by weight, such as at least 95% by weight, preferably at least 98%, most preferably 100% by weight of the same polymer material.

2. The method according to claim 1, wherein in the step of creating the base material an adhesive film or foil is placed between the core and each of the outer layers, respectively, to create bonding between the layers, wherein the adhesive film or foil is made from the same polymer material as the rest of the base material.

3. The method according to claims 1 or 2, wherein the foam material of the core has a density between 0.01 g/cm³ and 0.7 g/cm³, such as between 0.05 g/cm³ and 0.5 g/cm³, preferably 0.1 g/cm³.

4. The method according to any of the preceding claims, wherein the foam material of the core has a thickness between 1 mm and 50 mm, such as between 5 mm and 30 mm, preferably 15 mm.

5. The method according to any of the preceding claims, wherein the outer layer comprises woven self-reinforcing continuous fibres commingled with continuous matrix filaments, made from the same polymer material, wherein the melting point of the matrix filaments is lower than the melting point of the reinforcement fibres and the core.

6. The method according to any of the preceding claims, wherein the outer layer has a density between 0.5 g/cm³ and 5 g/cm³, such as between 0.9 g/cm³ and 3 g/cm³, preferably 1.36 g/cm³.

7. The method according to any of the preceding claims, wherein the outer layer has a thickness between 0.5 mm and 5 mm, such as between 0.8 mm and 3 mm, preferably 1.1 mm.

8. The method according to any of the preceding claims, wherein in the step of creating the base material the core and the outer layers are laminated together through a prepreg or press operation.

9. The method according to any of the preceding claims, wherein the polymer material is Polyethylene terephthalate (PET), Polylactic acid (PLA) or Polyamide (PA).

10. The method according to any of the preceding claims, wherein the heating takes place at a temperature between 130 °C and 210 °C, such as between 140 °C and 200 °C, preferably at 170 °C.

11. The method according to any of the preceding claims, wherein the heating lasts from 15 to 90 seconds, such as 30 to 75 seconds, preferably for 50 seconds.

12. The method according to any of the preceding claims, wherein the heated material, after the end of the heating period, is moved to a forming station, within less than 10 seconds, such as within less than 8 seconds, preferably within 1 to 5 seconds.

13. The method according to any of the preceding claims, wherein the forming station comprises a press mould and a curing station.

14. The method according to claim 13, wherein the press mould is preheated to a temperature of between 40 °C and 150 °C, such as between 50 °C and 110 °C, preferably 80 °C.

15. The method according to claims 13 or 14, wherein the temperature of the press mould is kept while pressing the heated piece into the desired three-dimensional shape.

16. The method according to claims 13 to 15, wherein the three-dimensional shaped material is kept under pressure in the mould for a time period between 3 and 60 seconds, such as between 5 and 30 seconds, preferably between 8 and 15 seconds, most preferably for 11 seconds.
